# EUROPÄISCHE PATENTSCHRIFT

(11) **EP 2 844 413 B1**
(45) Veröffentlichungstag und Bekanntmachung des Hinweises auf die Patenterteilung: **16.01.2019**
(21) Anmeldenummer: 13718847.0
(22) Anmeldetag: 26.04.2013
(51) Int. Cl.: B23B 31/00, B23B 31/26

(54) **AUSWUCHTADAPTER**
CHUCK
MANDRIN

(30) Priorität: 30.04.2012 DE 202012101591 U
(43) Veröffentlichungstag der Anmeldung: 11.03.2015
(73) Patentinhaber: Haimer GmbH, 86568 Hollenbach-Igenhausen (DE)
(72) Erfinder: HAIMER, Franz, 86568 Igenhausen (DE); KIRMAYER, Lothar, 84166 Adelkofen (DE)
(74) Vertreter: Charrier Rapp & Liebau
(86) Internationale Anmeldenummer: PCT/EP2013/058758
(87) Internationale Veröffentlichungsnummer: WO 2013/164270

(56) Entgegenhaltungen:
- DE-A1- 3 838 959
- DE-A1- 4 201 013
- FR-A1- 2 608 956
- JP-A- S58 160 037

## Beschreibung

Die Erfindung betrifft einen Auswuchtadapter nach dem Oberbegriff des Anspruchs 1. Ein solcher Adapter wird im Dokument DE 38 38 959 A1 gezeigt.

Aus der DE 299 80 181 U1 ist eine Auswuchtmaschine mit einer Spannvorrichtung zur Einspannung eines rotierenden Maschinenelements bekannt. Die Spannvorrichtung enthält einen Grundkörper mit einer zentrischen Aufnahmeöffnung für das Maschinenelement und eine relativ zum Grundkörper axial verstellbare Zangenbetätigungseinheit für eine Spannzange. Bei dieser bekannten Spannvorrichtung einer Auswuchtmaschine wird das Maschinenelement durch klauenförmige Spannelemente an der Spannzange in der Werkzeugaufnahme gehalten. Zum Spannen stützen sich die Spannelemente der Spannzange an einer Anschlagfläche eines Betätigungskopfs einer Zangenbetätigungseinheit ab. Die Zangenbetätigungseinheit ist in einem Grundteilkörper mittels Wälzlager gelagert und der Grundteilkörper ist wiederum mit dem Grundkörper verschraubt. Durch eine derartige Verbindung und die vielen Verbindungsstellen zwischen der Anschlagfläche für die Spannelemente und dem Grundkörper können sich jedoch Probleme mit der Zentrierung ergeben, was sich negativ auf die Rundlaufgenauigkeit der Werkzeugaufhahme auswirken kann.

Aufgabe der Erfindung ist es, einen Auswuchtadapter zu schaffen, der eine positionsgenaue und reproduzierbare Aufnahme und Halterung einer Rotors oder eines anderen auszuwuchtenden Maschinenelements ermöglicht.

Diese Aufgabe wird durch einen Auswuchtadapter mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Auswuchtadapter werden die Spannelemente der Spannzange an einer Führungsfläche am Grundkörper abgestützt. Dadurch wird eine hohe Genauigkeit der Positionierung der Spannelemente in Bezug zu den Passflächen des Grundkörpers erzielt. Die Spannköpfe werden symmetrisch zum Maschinenelement positioniert, so dass die Spannung ebenfalls symmetrisch erfolgt. Es gibt somit auch keine Radialkräfte, welche die Wiederholgenauigkeit der Spannung negativ beeinflussen könnten. Es sind keine zusätzlichen Führungsteile für die Spannelemente erforderlich, wodurch die Anzahl der Teile und der Fertigungs- bzw. Montageaufwand verringert werden kann. Durch ein geringeres Gewicht der rotierenden Massen kann die Messgenauigkeit erhöht und das Messergebnis verbessert werden.

In einer vorteilhaften Ausführung umfasst die Betätigungseinrichtung einen innerhalb einer Führungshülse axial verschiebbaren Kolben. Der Kolben kann z.B. pneumatisch, hydraulisch oder auf andere geeignete Weise betätigt werden. Die Spannzange kann aber durch eine anderen Antrieb betätigt werden.

In einer günstigen Ausführungsform ist die Spannzange fest mit dem Kolben verbunden. Bei bisherigen Ausführungsformen war dies nicht möglich, da die Spannzangen beweglich bleiben mussten, um Ungenauigkeiten der Bauteile auszugleichen. Durch eine feste Verbindung der Spannzange mit dem Kolben wird die Anzahl der zueinander beweglichen Teile reduziert und somit eine höhere Mess- und Wiederholgenauigkeit erreicht.

In einer weiteren vorteilhaften Ausführungsform ist zwischen dem Kolben und dem Grundkörper ein Dämpfungselement angeordnet. Zum Lösen des Rotors wird die Betätigungseinrichtung an den Grundkörper angefahren. Es besteht dabei die Gefahr, dass der entstehende Stoß den Rotor insbesondere bei kleiner Bauweise nicht nur löst, sondern komplett aus der Aufnahmeöffnung ausstößt. Mit einem Dämpfungselement, welches z.B. aus Moosgummi bestehen kann, wird dieser negative Effekt umgangen.

Der Kolben kann ein Anschlagteil mit einer Anschlagfläche zur Anlage an einer Anschlagfläche des Grundkörpers aufweisen. Dadurch, dass die Anschlagflächen nahe an dem Grundkörper oder durch diesen selbst gebildet werden, beeinflussen nur wenige Fertigungstoleranzen die Lage der Anschlagflächen, so dass trotz hoher Anforderung an die Genauigkeit auf einen zusätzlichen Verstellmechanismus der Anschläge verzichtet werden kann.

In einer weiteren vorteilhaften Ausführungsform ist innerhalb der Spannzange ein Auswerfer zum Ausstoßen des Rotors beim Lösehub vorgesehen. Der Auswerfer ist vorzugsweise einteilig mit dem Kolben ausgeführt oder über einen Gewindezapfen in einem Sackloch des Kolbens befestigt. Da der Kolben z.B. durch ein Druckmedium bewegt wird ist die Abdichtung des Kolbens äußerst wichtig. Ein Sackloch hat den Vorteil, dass der Kolben nicht durch die Aufnahme des Auswerfers durchbrochen wird und somit auch keine weiteren Abdichtungsmaßnahmen nötig werden.

In einer weiteren vorteilhaften Ausgestaltung ist in einem zylindrischen Absatz des Grundkörpers eine innere zylindrische Führungsfläche für die Führungshülse und an der Außenseite des zylindrischen Absatzes eine Zentrierfläche zur Aufnahme in einer entsprechenden Zentrieraufnahme des rotierenden Maschinenteils angeordnet. Dadurch können die zur Zentrierung verwendeten Führungs- bzw. Zentrierflächen des Grundkörpers sogar axial überlappen, wodurch eine kurze Bauweise und ein geringeres Gewicht ermöglicht wird.

Um die Reibung bei der Bewegung des Kolbens zu reduzieren und den Kolben spielfrei mit geringer Vorspannung zu zentrieren, kann dieser über eine mit Wälzkörpern versehene Lagerbuchse in der Führungsbuchse gelagert sein.

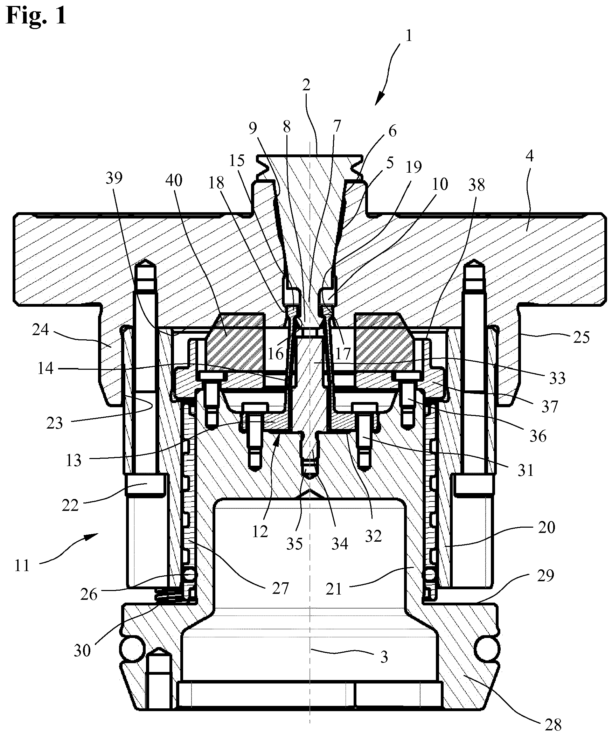

Weitere Besonderheiten und Vorzüge der Erfindung ergeben sich aus der folgenden Beschreibung eines bevorzugten Ausführungsbeispiels anhand der einzigen Figur 1, die einen erfindungsgemäßen Auswuchtadapter in einem Längsschnitt zeigt.

Der in Figur 1 gezeigte Auswuchtadapter 1 ist zum Spannen eines Rotors 2 an einem um eine Drehachse 3 rotierenden Maschinenteil einer Auswuchtmaschine bestimmt. Der Auswuchtadapter 1 enthält einen z.B. an einer Maschinenspindel einer Auswuchtmaschine befestigbaren Grundkörper 4 mit einer zur Drehachse 3 zentrischen Aufnahmeöffnung 5 für einen Kupplungsschaft 6 des Rotors 2. Der Rotor kann z.B. eine Werkzeugaufnahme für ein Bohr-, Fräs- oder Schleifwerkzeug oder ein anderes auszuwuchtendes Maschinenteil sein. Bei der gezeigten Ausführung enthält der Rotor 2 einen kegelförmigen Kupplungsschaft 6 und einen unteren zylindrischen Spannzapfen 7 mit einem vergrößerten Spannkopf 8. Die Aufnahmeöffnung 5 des Grundkörpers 4 weist eine obere konische Passfläche 9 für den kegelförmigen Kupplungsschaft 6 und einen unteren Bereich 10 zur Aufnahme des Spannzapfens 7 mit dem vergrößerten Spannkopf 8 auf.

An der Unterseite des Grundkörpers 4 ist eine Betätigungseinrichtung 11 für eine Spannzange 12 angeordnet. Die Spannzange 12 weist einen ringförmigen Sockel 13 und mehrere in Umfangsrichtung durch axiale Schlitze voneinander getrennte, radial federnde Zungen 14 mit klauenförmigen Spannelementen 15 an den freien Enden der Zungen 14 zur lösbaren Halterung des Rotors 2 in der Aufnahmeöffnung 5 des Grundkörpers 4 auf. Die klauenförmigen Spannelemente 15 sind zum Einzug und zur Halterung des Spannzapfens 7 konzipiert und weisen eine radial innere schräge Spannfläche 16 zur Anlage an einer oberen Gegenfläche 17 am Spannkopf 8 auf. Über eine äußere Fläche 18 sind die Spannelemente 15 direkt am Grundkörper 4 an einer entsprechenden Führungsfläche 19 im unteren Bereich 10 der Aufuahmeöffuung 5 des Grundkörpers 4 abgestützt.

Die Betätigungseinrichtung 11 umfasst einen innerhalb einer Führungshülse 20 axial verschiebbaren Kolben 21, an dessen Oberseite die Spannzange 12 montiert ist. Die Führungshülse 20 ist über Schrauben 22 an der Unterseite des Grundkörpers 4 befestigt. Zur genauen Führung und exakten Ausrichtung der Führungshülse 20 gegenüber dem Grundkörper 4 weist der Grundköper 4 eine innere zylindrische Führungsfläche 23 in einem zylindrischen unteren Absatz 24 auf. Der zylindrische Absatz 24 enthält an seiner Außenseite eine Zentrierfläche 25 zur Aufnahme in einer entsprechenden Zentrieraufnahme des rotierenden Maschinenteils. Der Kolben 21 ist innerhalb der Führungshülse 20 über eine mit Wälzkörpern 26 versehene Lagerbuchse 27 axial verschiebbar geführt. Der Kolben 21 weist einen unteren Ringbund 28 mit einer oberen ringförmigen Anlagefläche 29 auf. Zwischen der ringförmigen Anlagefläche 29 des Kolbens 21 und der Führungshülse 20 ist eine Druckfeder 30 eingespannt.

Die Spannzange 12 ist über den ringförmigen Sockel 13 mit Hilfe von Schrauben 31 in einer entsprechenden Vertiefung 32 an der oberen Stirnseite des Kolbens 21 befestigt. Innerhalb der Spannzange 12 ist ein stangenförmiger Auswerfer 33 angeordnet, der über einen Gewindezapfen 34 in einem Sackloch 35 an der oberen Stirnseite des Kolbens 21 befestigt ist. An der oberen Stirnseite des Kolbens 21 ist mit Hilfe von Schrauben 36 ferner ein ringförmiges Anschlagteil 37 mit einer oberen Anschlagfläche 38 zur Anlage an einer unteren Anschlagfläche 39 des Grundkörpers 4 befestigt. Zwischen dem ringförmigen Anschlagteil 37 und dem Grundkörper 4 ist ein Dämpfungselement 40 vorgesehen.

In Figur 1 ist der Auswuchtadapter 1 in einem gespannten Zustand gezeigt. Der Kolben 21 wird durch die Druckfeder 30 nach unten gedrückt, wodurch die klauenförmigen Spannelemente 15 der am Kolben 21 befestigten Spannzange 12 über die Führungsflächen 19 am Grundkörper 4 radial einwärts in eine Spannstellung gedrückt werden und der Rotor 2 über die an den Gegenflächen 17 des Spannkopfs 8 anliegenden Spannflächen 16 der Spannelemente 15 axial eingezogen und gehalten wird.

Wenn der Kolben 21 z.B. pneumatisch entgegen der Kraft der Druckfeder 30 nach oben verschoben wird, gelangen die Spannelemente 15 in einen erweiterten Teil des unteren Bereichs 10 der Aufnahmeöffnung 5, so dass sich die Spannelemente 15 radial nach außen in eine Lösestellung bewegen können und den Spannkopf 8 zur Entnahme des Rotors 2 freigeben. Bei der Aufwärts-Verschiebung des Kolbens 21 gelangt auch der stangenförmige Auswerfer 33 zur Anlage an der unteren Stirnfläche des Spannkopfs 8, wodurch der Rotor 2 über den Auswerfer 33 ausgestoßen wird. Der Spannhub des Kolbens 21 wird durch Anlage des ringförmiges Anschlagteils 37 an einer Stufe der Führungshülse 20 begrenzt. Der Lösehub wird durch Anlage der oberen Anschlagfläche 38 des ringförmiges Anschlagteils 37 an einer unteren Anschlagfläche 39 des Grundkörpers 4 begrenzt.

Der Lösevorgang kann schnell und ohne großen Zeitverlust ablaufen. In der Endphase des Lösehubs wird der Rotor 2 mit dem Auswerfer 33 aktiv so weit aus dem Grundkörper 4 ausgestoßen, dass er gelockert wird und von Hand entnommen werden kann. Durch das zwischen dem ringförmigen Anschlagteil 37 und dem Grundkörper 4 angeordnete Dämpfungselement aus z.B. Moosgummi kann der Stoß beim Lösevorgang abgebremst werden. Dadurch kann insbesondere bei kleinen Rotoren 2 verhindert werden, dass diese komplett aus dem Grundkörper herausgeworfen werden.

## Patentansprüche

1. Auswuchtadapter (1) zum Spannen eines Rotors (2) an einem um eine Drehachse (3) rotierenden Maschinenteil einer Auswuchtmaschine, der einen Grundkörper (4) mit einer zentrischen Aufnahmeöffnung (5) für den Rotor (2), eine Spannzange (12) mit Spannelementen (15) zur lösbaren Halterung des Rotors (2) in der Aufnahmeöffnung (5) und eine Betätigungseinrichtung (11) zur Bewegung der Spannelemente (15) zwischen einer Spannstellung und Lösestellung enthält, wobei die Spannelemente (15) der Spannzange (12) an einer Führungsfläche (19) am Grundkörper (4) abgestützt sind und die Betätigungseinrichtung (11) einen innerhalb einer Führungshülse (20) axial verschiebbaren Kolben (21) umfasst, **dadurch gekennzeichnet, dass** die Spannzange (12) fest mit dem Kolben (21) verbunden ist.

2. Auswuchtadapter nach Anspruch 1, **dadurch gekennzeichnet, dass** zwischen dem Kolben (21) und dem Grundkörper (4) ein Dämpfungselement (40) angeordnet ist.

3. Auswuchtadapter nach Anspruch 1 oder 2, **dadurch gekennzeichnet, dass** der Kolben (21) ein Anschlagteil (37) mit einer Anschlagfläche (38) zur Anlage an einer Anschlagfläche (39) des Grundkörpers (4) enthält.

4. Auswuchtadapter nach einem der Ansprüche 1 bis 3, **dadurch gekennzeichnet, dass** innerhalb der Spannzange (12) ein an der oberen Stirnseite des Kolbens (21) befestigter Auswerfer (33) angeordnet ist.

5. Auswuchtadapter nach Anspruch 4, **dadurch gekennzeichnet, dass** der Auswerfer (33) über einen Gewindezapfen (34) in einem Sackloch (35) des Kolbens (21) befestigt ist.

6. Auswuchtadapter nach einem der Ansprüche 1 bis 5, **dadurch gekennzeichnet, dass** der Grundkörper (4) eine innere zylindrische Führungsfläche (23) für die Führungshülse (20) enthält.

7. Auswuchtadapter nach Anspruch 6, **dadurch gekennzeichnet, dass** die innere zylindrische Führungsfläche (23) in einem zylindrischen Absatz (24) des Grundkörpers (4) angeordnet ist.

8. Auswuchtadapter nach Anspruch 7, **dadurch gekennzeichnet, dass** der zylindrische Absatz (24) an seiner Außenseite eine Zentrierfläche (25) zur Aufnahme in einer entsprechenden Zentrieraufnahme des rotierenden Maschinenteils enthält.

9. Auswuchtadapter nach einem der Ansprüche 1 bis 8, **dadurch gekennzeichnet, dass** der Kolben (21) über eine mit Wälzkörpern (26) versehene Lagerbuchse (27) in der Führungshülse (20) gelagert ist.

## Claims

1. Balancing adapter (1) for clamping a rotor (2) on a machine part of a balancing machine rotating about an axis of rotation (3) and which contains a base body (4) with a centric receiving opening (5) for the rotor (2), a collet chuck (12) with clamping elements (15) for releasable mounting of the rotor (2) in the receiving opening (5) and an actuating device (11) for moving the clamping elements (15) between a clamping position and release position, wherein the clamping elements (15) of the collect chuck (12) are supported at a guide surface (19) on the base body (4) and the actuating device (11) comprises a piston (21) which can be axially displaced within a guide sleeve (20), **characterised in that** the collet chuck (12) is firmly connected to the piston (21).

2. Balancing adapter according to claim 1, **characterised in that** a damping element (40) is arranged between the piston (21) and the base body (4).

3. Balancing adapter according to claim 1 or 2, **characterised in that** the piston (21) contains a stop part (37) with a stop surface (38) for resting on a stop surface (39) of the base body (4).

4. Balancing adapter according to one of claims 1 to 3, **characterised in that** an ejector (33) attached to the upper end-face side of the piston (21) is arranged within the collect chuck (12).

5. Balancing adapter according to claim 4, **characterised in that** the ejector (33) is attached in a blind hole (35) of the piston (21) via a threaded pin (34).

6. Balancing adapter according to one of claims 1 to 5, **characterised in that** the base body (4) contains an inner cylindrical guide surface (23) for the guide sleeve (20).

7. Balancing adapter according to claim 6, **characterised in that** the inner cylindrical guide surface (23) is arranged in a cylindrical recess (24) of the base body (4).

8. Balancing adapter according to claim 7, **characterised in that** the cylindrical recess (24) on its outer side contains a centring surface (25) for receiving in a corresponding centring receiver of the rotating machine part.

9. Balancing adapter according to one of claims 1 to 8, **characterised in that** the piston (21) is mounted in the guide sleeve (20) via a bearing bush (27) provided with roller bodies (26).

## Revendications

1. Adaptateur d'équilibrage (1) servant à serrer un rotor (2) au niveau d'une pièce de machine, tournant autour d'un axe de rotation (3), d'une machine d'équilibrage, qui contient un corps de base (4) avec une ouverture de logement (5) centrale pour le rotor (2), une pince de serrage (12) avec des éléments de serrage (15) servant à maintenir de manière amovible le rotor (2) dans l'ouverture de logement (5) et un dispositif d'actionnement (11) servant à déplacer les éléments de serrage (15) entre une position de serrage et une position de desserrage, dans lequel les éléments de serrage (15) de la pince de serrage (12) prennent appui au niveau d'une surface de guidage (19) au niveau du corps de base (4) et le dispositif d'actionnement (11) comprend un piston (21) pouvant être coulissé de manière axiale à l'intérieur d'une douille de guidage (20), **caractérisé en ce que** la pince de serrage (12) est reliée de manière solidaire au piston (21).

2. Adaptateur d'équilibrage selon la revendication 1, **caractérisé en ce qu'**un élément d'amortissement (40) est disposé entre le piston (21) et le corps de base (4).

3. Adaptateur d'équilibrage selon la revendication 1 ou 2, **caractérisé en ce que** le piston (21) contient une pièce de butée (37) avec une surface de butée (38) destinée à venir en appui au niveau d'une surface de butée (39) du corps de base (4).

4. Adaptateur d'équilibrage selon l'une quelconque des revendications 1 à 3, **caractérisé en ce qu'**un éjecteur (33) fixé au niveau du côté frontal supérieur du piston (21) est disposé à l'intérieur de la pince de serrage (12).

5. Adaptateur d'équilibrage selon la revendication 4, **caractérisé en ce que** l'éjecteur (33) est fixé par l'intermédiaire d'un tourillon fileté (34) dans un trou borgne (35) du piston (21).

6. Adaptateur d'équilibrage selon l'une quelconque des revendications 1 à 5, **caractérisé en ce que** le corps de base (4) contient une surface de guidage (23) cylindrique intérieure pour la douille de guidage (20).

7. Adaptateur d'équilibrage selon la revendication 6, **caractérisé en ce que** la surface de guidage (23) cylindrique intérieure est disposée dans un décrochement (24) cylindrique du corps de base (4).

8. Adaptateur d'équilibrage selon la revendication 7, **caractérisé en ce que** le décrochement (24) cylindrique contient au niveau de son côté extérieur une surface de centrage (25) destinée à être logée dans un logement de centrage correspondant de la pièce de machine rotative.

9. Adaptateur d'équilibrage selon l'une quelconque des revendications 1 à 8, **caractérisé en ce que** le piston (21) est monté dans la douille de guidage (20) par l'intermédiaire d'un coussinet (27) pourvu de corps de roulement (26).
